(19) Europäisches Patentamt
European Patent Office
Office européen des brevets

(11) **EP 3 172 434 B1**

(12) **EUROPEAN PATENT SPECIFICATION**

(45) Date of publication and mention of the grant of the patent:
**18.12.2019 Bulletin 2019/51**

(21) Application number: **15738678.0**

(22) Date of filing: **17.07.2015**

(51) Int Cl.:
**F03D 17/00** *(2016.01)*    **G01M 5/00** *(2006.01)*

(86) International application number:
**PCT/EP2015/066445**

(87) International publication number:
**WO 2016/012372 (28.01.2016 Gazette 2016/04)**

(54) **SYSTEM AND METHODOLOGY FOR DETECTING STRUCTURAL DAMAGES OF WIND TURBINE ROTOR BLADES**

SYSTEM UND VERFAHREN ZUR ERKENNUNG STRUKTURELLER SCHÄDEN VON WINDTURBINENROTORBLÄTTERN

SYSTÈME ET MÉTHODOLOGIE PERMETTANT DE DÉTECTER DES DÉGÂTS STRUCTURELS DE PALES DE ROTOR D'ÉOLIENNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.07.2014 EP 14177876**

(43) Date of publication of application:
**31.05.2017 Bulletin 2017/22**

(73) Proprietor: **Brüel & Kjaer Sound & Vibration Measurement A/S**
**2850 Naerum (DK)**

(72) Inventor: **TCHERNIAK, Dmitri**
**3050 Humlebæk (DK)**

(74) Representative: **Guardian**
**IP Consulting I/S**
**Diplomvej, Building 381**
**2800 Kgs. Lyngby (DK)**

(56) References cited:
EP-A1- 2 626 683        DE-A1- 10 065 314
US-A1- 2012 253 697     US-A1- 2013 195 657

**Description**

The present invention relates in one aspect to a damage detection system for a wind turbine rotor blade. The damage detection system comprises a first actuator configured for attachment to a first actuator position on a wall surface of the wind turbine rotor blade and injecting mechanical energy into the wall surface. A first vibration sensor, such as an accelerometer, is configured for measuring mechanical waves propagating through the wall of the rotor blade at a first sensor position. A second vibration sensor, such as an accelerometer, is configured for measuring mechanical waves propagating through the wall of the rotor blade at a second sensor position. The first and second sensor positions are spaced apart with a predetermined distance along the wall surface of the rotor blade. The damage detection system further comprises a damage detector configured for receipt of first and second vibration signals generated by the first and second vibration sensors, respectively, and detecting structural damage of the rotor blade based on phase and/or magnitude differences between the first and second vibration signals.

BACKGROUND OF THE INVENTION

Damage detection systems for wind turbine rotor blade are of growing interest in the wind energy industry. As wind turbines size continues to increase, and thereby invested capital, there is an increasing need to monitor the structural integrity of the wind turbine rotor blades. A fundamental action for owners or operators of wind turbines is early indications of structural damage or mechanical problems with the rotor blades, or possibly other components, of the wind turbine. Early problem identification or warning allows the owner or operator to better plan for maintenance of the wind turbine and possibly operating the wind turbine at a de-rated condition rather than shutting the wind turbine down. However, the wind turbine may need to be shut down in case of an emergency to avoid further damage to the rotor blade. The most expensive components of a wind turbine are the rotor blades, which may account for 15-20% of the initial capital investment. It is therefore important to provide a system and methodology capable of continuously or regularly monitoring the structural integrity of the rotor blades for early detection of structural damages and avoid a critical failure that could force the operator to replace the rotor blade with significant negative impact on the capital costs. Moreover, a structurally damaged rotor blade of an operating wind turbine leads to a reduction of power production because of losses on the aeroelastic properties of the rotor blade. A structurally damaged rotor blade can also endanger the safety of surrounding areas of the wind turbine because of blade pieces thrown from the wind turbine. A damaged rotor blade can finally represent a health threat to the entire wind turbine structure whose performances can be heavily compromised and, in a worst case scenario, brought to critical failure.

A list of typical structural damages that can be observed on a rotor blade has been reported in the literature such as damage formation and growth in an adhesive layer joining skin and main spar flanges etc.

Documents DE 100 65 314 A1 and US 2012/0253697 A1 provide examples of damage detection for wind turbine rotor blades.

Hence, there is a need for improved structural damage detection systems and methodologies for wind turbine rotor blades. The improved damage detection systems and methodologies should preferably be able to monitor the wind turbine rotor blade during operation of the wind turbine to allow early detection of structural damages or other integrity problems in the rotor blade.

SUMMARY OF INVENTION

A first aspect of the invention relates to a damage detection system for a wind turbine rotor blade according to claim 1. The damage detection system comprises a first actuator configured for attachment to a first actuator position on a structural element surface, such as a wall surface, of the wind turbine rotor blade or rotor blade and injecting mechanical energy into the structural element surface. A first vibration sensor, such as an accelerometer, is configured for measuring mechanical waves propagating through the structural element of the rotor blade at a first sensor position. A second vibration sensor, such as an accelerometer, is configured for measuring mechanical waves propagating through the structural element, e.g. a wall, of the rotor blade at a second sensor position. The first and second sensor positions are spaced apart with a predetermined distance along the structural element surface of the rotor blade. The damage detection system further comprises a damage detector configured for receipt of first and second vibration signals generated by the first and second vibration sensors, respectively, and detecting structural damage of the rotor blade based on phase and/or magnitude differences between the first and second vibration signals.

The present methodology and system for condition monitoring and fault detection in rotor blades rely on the detection of phase and/or magnitude differences between the first and second vibration signals generated by disturbances of the mechanical wave propagation from the first actuator position, i.e. the actuator impact location where mechanical energy is injected into the structural element, e.g. wall, of the rotor blade, to at least the first and second vibration sensors - optionally to one or more additional vibration sensors. These wave propagation disturbances are typically caused by various types of structural or mechanical damage of the wall surface of the rotor blade. The first and second vibration signals are generated in response to the same impact, effected e.g. by the first actuator, at the actuator impact location of the structural element of the rotor blade The disturbance of the mechanical wave propagation alters the phase and/or magnitude difference(s) between the first and second vibration signals relative to the corresponding phase and/or magnitude difference(s) between the first and second vibration signals of a structurally undamaged or healthy rotor blade.

The phase and/or magnitude differences between the first and second vibration signals, or certain signal features derived from these phase and/or magnitude differences, may be recorded in a learning phase or stage of the damage detector where the rotor blade is in a known undamaged condition or state. In one such embodiment, the damage detector is configured for:

measuring baseline or reference first and second vibration signals in connection with a detector learning phase where the wind turbine is operated with the rotor blade in an undamaged condition,

determining, and storing, for example in a detector memory, one or more baseline signal features representative of phase and/or magnitude differences between the first and second baseline vibration signals,

measuring first and second on-line vibration signals during operation of the wind turbine and determining one or more on-line signal features from the first and second on-line vibration signals,

comparing the one or more baseline signal features with the corresponding one or more on-line signal features during the operation of the wind turbine,

detecting the structural damage of the rotor blade based on a difference between the one or more baseline signal features and the one or more on-line signal features.

The damage detector may comprise a suitably configured collection of hardwired digital logic circuitry or a software programmable microprocessor such as a Digital Signal Processor (DSP) or any combination thereof. The damage detection may be carried out in accordance with an application program comprising a plurality of executable program instructions or program code running on the software programmable microprocessor or Digital Signal Processor (DSP).

The one or more baseline signal features may comprise a covariance feature of the measured first and second baseline vibration signals. Likewise, the one or more on-line signal features preferably comprise a corresponding covariance feature of the measured first and second on-line vibration signals. The covariance features may comprise the 2-norm of respective co-variance matrices formed by the baseline time domain vibration signals and the on-line time domain vibration signals as discussed in additional detail below in connection with the appended drawings.

In connection with normal operation of the wind turbine during production of electrical power, the damage detector may be configured to, at irregular or regular time intervals, actuate the first actuator and measure the first and second on-line vibration signals generated in response to the injection of mechanical energy into the wall or structural element of the rotor blade by the actuator actuation. The damage detector may for example be configured to actuate the first actuator at regular time intervals, i.e. at a predetermined repetition frequency, equal to or larger than 1 second, such as between 1 second and 24 hours, more preferably time intervals between 10 seconds and 1 hour. The on-line signal feature or features may be derived from recorded time domain representations of the first and second on-line vibration signals and compared with the corresponding earlier stored baseline signal feature or features. If the difference exceeds a predetermined limit, value or criterion, a structural damage of the rotor blade may be flagged by the damage detector. The predetermined limit, value or criterion may represent a statistically significant deviation between the measured on-line signal feature(s) and the stored baseline signal feature or features in view of the unavoidable noise signals generated by measurement electronics and the motion of the rotor blade of the wind turbine during normal operation. Hence, the present damage detection system may be used to detect structural damage to the rotor blade during normal operation of the wind turbine. This ability has numerous advantages for example enabling early detection of rotor blade structural damage such that suitable inspection and repair procedures can be carried out before catastrophic failure. This feature also eliminates the previously discussed problems and dangers associated with structurally damaged rotor blades.

The present damage detection system may be configured to synchronously sampling and digitizing the first and second vibration signals to acquire digital time domain representations thereof. In one embodiment the synchronous sampling of the first and second vibration signals is accomplished by the damage detector which comprises:

a first A/D converter configured to sample and digitize the first vibration signal in accordance with a first clock signal; and

a second A/D converter configured to sample and digitize the second vibration signal in accordance with a second clock signal which is synchronous to the first clock signal. The first and second vibration signals may be transmitted from the first and second vibration sensors, respectively, in analog format to the damage detector. The first and second vibration signals may comprise respective analog currents, charges, or optical signals. In the latter embodiment, the first and second vibration sensors may each comprise a fiber optic accelerometer, for example the fiber optic accelerometer described in European patent No. 2 569 644 B1, supplying the first and second vibration signals as respective optical signals.

In an alternative embodiment, the synchronous sampling of the first and second vibration signals may be accomplished in the first and second vibration sensors, for example by suitable electronic circuits arranged inside a sensor housing, such that the first and second vibration sensors may output respective digitally coded vibration signals. In this embodiment, the first vibration sensor comprises a first A/D converter configured to sample and digitize the first vibration signal in accordance with a first clock signal; and wherein the second vibration sensor comprises a second A/D converter configured to sample and digitize the second vibration signal in accordance with a second clock signal which is synchronous to the first clock signal.

The first and second clock signals may be derived from a master clock signal generated by the damage detector and transmitted to the first and second vibration sensors via respective data cables or via a wireless data communication link.

The first actuator, and any additional actuators, may comprise an electrodynamic actuator with a plunger. The plunger may have a weight larger than 25 g, such as larger than 50 g or even larger than 100 g. A relatively large weight of the plunger allows the electrodynamic actuator to inject a high level of mechanical energy into the relevant wall section or structure of the rotor blade. This is an important feature to produce mechanical waves in the wall of the rotor blade of sufficiently large magnitude to be reliably detected despite various interfering noise signals such as wind turbulence induced noise and vibrational noise. The plunger of the actuator possesses a peak kinetic energy, at the impact on the wall surface of the rotor blade, larger than 0.1 J, preferably larger than 0.2 J, even more preferably larger than 0.4 J.

The actuation of the structural element(s) of the rotor blade with such a high weight plunger and/or high peak kinetic energy impact at a low repetition frequency, for example as outlined above, leads to the generation of mechanical waves with a dominating low frequency content. Therefore, the spectrum of each of the first and second vibration signals, generated by such low frequency mechanical waves, is dominated by low frequency spectral components such as spectral components below the ultrasonic range, for example spectral components below 3 kHz or below 1 kHz. This feature is advantageous because the low frequency nature of the mechanical waves generated by the first actuator compared to traditional ultrasonic actuators impacts allows wave propagation through a large distance of the rotor blade wall or structure for example more than 20 meters, 30 meters or even 50 meters. Hence, the mechanical waves may propagate through the entire length of even large rotor blade using a single actuator.

The present damage detection system may never the less comprise at least a second actuator configured for attachment to a second actuator position of a wall surface of the rotor blade and injecting mechanical energy into the wall surface. The second actuator, and possible additional actuators, may possess the same physical characterises as the first actuator. The skilled person will understand that the total number of actuators mounted on a single rotor blade and their distribution over wall surfaces of the rotor blade may vary depending on dimensions and construction details of the rotor blade. The total number of actuators mounted on a single rotor blade may also depend on various cost or complexity constraints of the system. The total number of actuators mounted on a single rotor blade may lie between 1 and 10 depending on various application specific factors such as dimensions of the rotor blade.

A second aspect of the invention relates to a wind turbine rotor blade according to claim 7, comprising: an upper elongate wall or structural element, a lower elongate wall or structural element, a leading edge section and a trailing edge section, an inner reinforcement structure mechanically connecting the upper elongate wall or structural element and the lower elongate wall or structural element and a foot section for mounting on a pitch-bearing. The wind turbine rotor blade further comprises a first actuator attached at a first actuator position on a surface of the upper or lower elongate walls or structural elements or on a surface of the inner reinforcement structure where said first actuator is configured to inject mechanical energy into the wall or structural element surface. A first vibration sensor, such as an accelerometer, is attached to the upper or lower elongate wall or the upper or lower structural element at a first sensor position and configured for measuring mechanical waves propagating through the upper or lower elongate wall or structural element of the rotor blade. A second vibration sensor, such as an accelerometer, is attached to the upper or lower elongate wall or the upper or lower structural element at a second sensor position and configured for measuring mechanical waves propagating through the upper or lower elongate wall or structural element of the rotor blade; wherein the first and second sensor positions are spaced apart with a predetermined distance on the wall or structural element surface of the rotor blade. The wind turbine rotor blade further comprises an electrical interface assembly configured for receipt of first and second vibration signals generated by the first and second vibration sensors, respectively, and supplying an actuator control signal to the first actuator.

The dimensions and other properties of the wind turbine rotor blade have been discussed in detail above. The respective properties of the first and second vibration sensors and the first actuator have likewise been discussed in detail above and will not be repeated here.

The electrical interface assembly may interconnect or couple the first and second vibration signals and the actuator control signal with a damage detector, and possibly a controller, that either may be mounted in the rotor blade or arranged distant from the rotor blade for example in a so-called nacelle of the wind turbine or in a remote control center at ground level. The electrical interface assembly is preferably mounted relatively close to the foot section of the rotor blade to minimize the length of electrical wiring to the wind turbine which may supply power for the electrical interface assembly via a suitable rotatable electromechanical coupling arrangement. The detector may comprise a controller generating and transmitting the actuator control signal for the first actuator to the electric interface assembly.

The first actuator position is preferably on an inner surface of the upper or lower elongate walls or on a surface of the inner reinforcement structure. This position shields the first actuator, and any additional actuators, from harsh environmental conditions such as wind, rain, humidity which could shorten the operational life of the actuator(s). The first and second sensor positions may be on an outer wall surface of the upper and lower elongate walls of the rotor blade. The first sensor position may be proximate to the leading edge section of the rotor blade and the second sensor position may be proximate to the trailing edge section of the rotor blade. The predetermined distance between the first and second vibration sensors along the wall surface of the rotor blade may lie between 1 m and 4 m, more preferably between 2 m and 3 m. The distance between the first actuator and at least one of the first and second vibration sensors may vary considerably depending on properties of the first actuator, in particular its peak kinetic energy capability as discussed above, and construction details of the rotor blade. The distance between the first actuator and at least one of the first and second vibration sensors may be larger than 20 m or 30 m. In some embodiments, the distance between the first actuator and at least one of the first and second vibration sensors lies between 1 m and 50 m, more preferably between 1 m and 6 m such as between 2 m and 4 m.

As mentioned above, the rotor blade may comprise one or more additional actuators attached to the surface of the upper or lower elongate walls or structural elements or attached to the surface of the inner reinforcement structure at respective spaced apart additional actuator positions. The one or more additional actuators are preferably attached to inner surfaces of the upper or lower elongate walls for the reasons discussed above. The rotor blade may comprise two or more additional sensors attached to the surface of the upper or lower elongate walls at respective spaced apart sensor positions. The two or more additional sensors are preferably attached to the outer surfaces of the upper or lower elongate walls of the rotor blade. The distance between the first actuator position and the nearest one of the spaced apart additional actuator positions of the one or more additional actuators may be larger than 4 m. Hence, the first actuator and any additional actuators are preferably distributed along the rotor blade and the same applies for the two or more additional vibration sensors. This allows structural damage to a large portion of the rotor blade to be detected because a pair of vibration sensors and an actuator are likely to be placed relatively close to the damage position in question. Exemplary distribution patterns of the several actuators and a plurality of vibration sensors are discussed in detail below with reference to the appended drawings.

A third aspect of the invention relates to a method of detecting structural damage of a rotor blade according to claim 12, comprising steps of:

a) mechanically attaching a first actuator to a first actuator position of a wall structural element surface of the rotor blade,

b) attaching a first vibration sensor, such as a first accelerometer, at a first sensor position on the wall surface or structural element surface of the rotor blade,

c) attaching a second vibration sensor, such as a second accelerometer, at a second sensor position on the wall surface or structural element surface of the rotor blade,

d) actuating the first actuator by an actuation signal to inject mechanical energy into the wall surface or structural element surface,

e) measuring a first vibration signal generated by the first vibration sensor in response to mechanical waves propagating through the wall or structural element of the rotor blade at the first sensor position,

f) measuring a second vibration signal generated by the second vibration sensor in response to mechanical waves propagating through the wall or structural element of the rotor blade at the second sensor position,

g) detecting structural damage of the rotor blade based on phase and/or magnitude differences between the first and second vibration signals.

The detection of the structural damage of the rotor blade based on phase and/or magnitude differences between the first and second vibration signals may be carried out in the rotor blade by a suitable damage detector or remotely from the rotor blade as discussed above.

The method of detecting structural damage may comprise repeating steps d) to g) at regular or irregular time intervals during normal operation of the wind turbine.

The skilled person will understand that the present method of detecting structural damage of the wind turbine rotor blade may be carried out during normal operation of the wind turbine or during off-line operation of the wind turbine. Under the latter circumstances, the rotor blades may rest which tend to reduce or eliminate the amount of interfering noise injected into the first and second vibration signals.

The method of detecting structural damage may comprising a further step of:

h) synchronously sampling and digitizing the first and second vibration signals as discussed in detail above.

According to a preferred embodiment of the present method of detecting structural damage, step g) comprises further steps of:

i) measuring baseline or reference first and second vibration signals in connection with a detector learning phase where the wind turbine is operated with the rotor blade in an undamaged condition,
j) determining and storing one or more baseline signal features representative of phase and/or magnitude differences between the first and second baseline vibration signals,
k) measuring first and second on-line vibration signals during operation of the wind turbine and determining one or more on-line signal features from the first and second on-line vibration signals,
l) comparing the one or more baseline signal features with the corresponding one or more on-line signal features during the operation of the wind turbine,
m) detecting the structural damage of the rotor blade based on a difference between the one or more baseline signal features and the one or more on-line signal features.

The one or more baseline signal features may comprise a covariance feature of the measured first and second baseline vibration signals; and wherein the one or more on-line signal features comprises a covariance feature of the measured first and second on-line vibration signals.

The first actuator and/or second actuator may be actuated at regular time intervals or at irregular time intervals - where a time interval between a pair successive actuations of the first actuator or a pair successive actuations of the second actuator may be longer than 1 s, such as longer than 60 s, or even longer than 1 hour or 24 hours as discussed above. If the first actuator is actuated at regular time intervals at a predetermined repetition frequency, such as the previously discussed low repetition frequency, the predetermined repetition frequency may be lower than 1 Hz, such as lower than 0.1 Hz, or even lower 0.01 Hz.

BRIEF DESCRIPTION OF THE DRAWINGS

A preferred embodiment of the invention will be described in more detail in connection with the appended drawings, in which:

FIG. 1 is a schematic drawing of a rotor blade comprising a plurality of actuators and a plurality of vibration sensors mounted thereon in accordance with a first embodiment of the invention,
FIG. 2A) is a simplified schematic cross-sectional view of the rotor blade illustrated on FIG. 1 taken orthogonally to a longitudinal axis of the rotor blade,
FIG. 2B) is a simplified schematic cross-sectional view of the rotor blade illustrated on FIG. 1 showing alternative placements of the actuators,
FIG. 3A) is a schematic illustration of mechanical waves, generated by mechanical impact of an actuator, propagating through an undamaged wall portion of the rotor blade,
FIG. 3B) is a schematic illustration of mechanical waves, generated by mechanical impact of an actuator, propagating through a damaged wall portion of the rotor blade,
FIG. 4 shows various schematic illustrations of one embodiment of the actuator for mounting on the rotor blade,
FIG. 5 shows a graph of exemplary synchronously recorded time domain vibration signals $a_1$ - $a_9$ generated by a subset of the vibration sensors 15a-15m in response to a single plunger impact of the actuator,
FIG. 6 is a flow-chart illustrating processing steps of the damage detection system in connection with measuring baseline vibration signals during a detector learning phase; and
FIG. 7 is a flow-chart illustrating processing steps of the damage detection system in connection with measuring on-line vibration signals and detecting structural damage of the rotor blade during normal wind turbine operation.

DESCRIPTION OF PREFERRED EMBODIMENTS

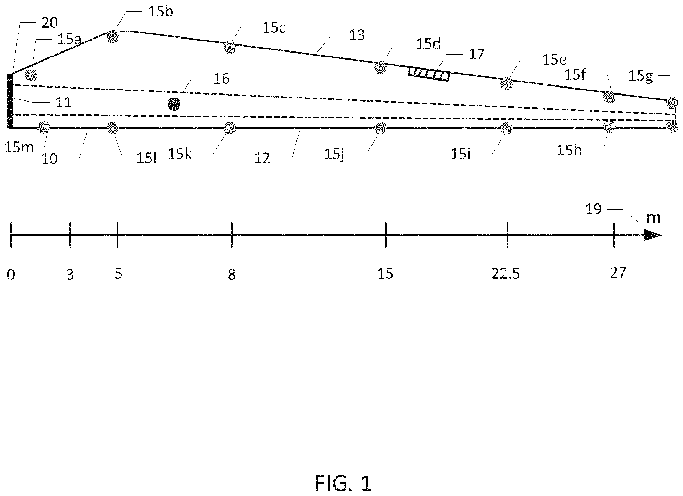

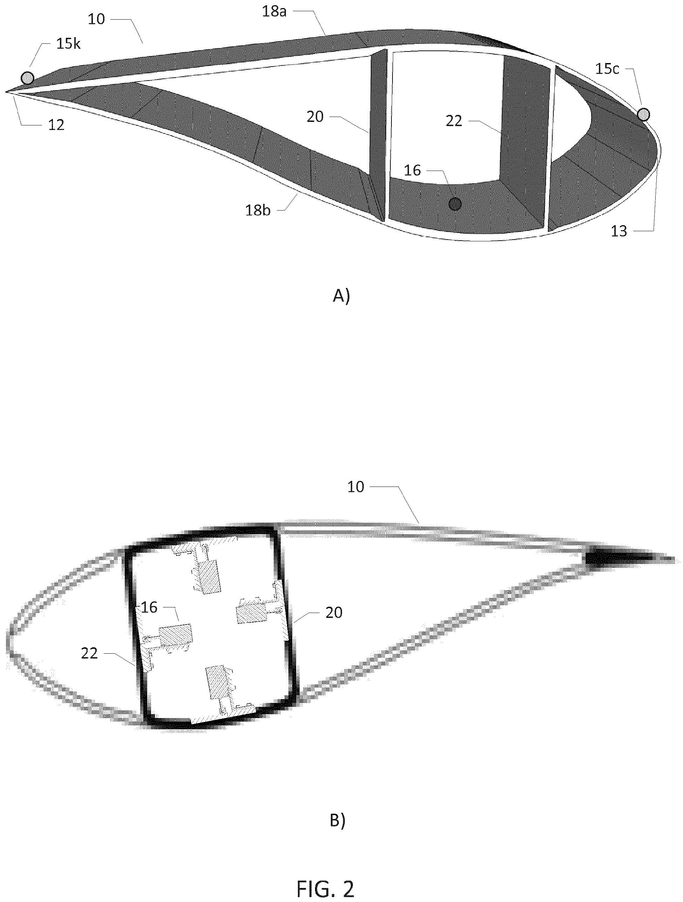

FIG. 1 is a schematic drawing of a damage detection system mounted to an exemplary wind turbine rotor blade 10. The skilled person will appreciate that the present damage detection system may be used for fault detection in many different types of wind turbine rotor blades. Wind turbine rotor blades are available in different mechanical designs depending on factors such as manufacturing technology and desired dimensions. The damage detection system comprises a first actuator 16 and a plurality of vibration sensors 15a - 15m mounted thereon. The skilled person will understand that the damage detection system may comprise one or more additional actuators distributed along the wind turbine rotor blade 10 for example with a spacing between each pair of actuators of 4 - 8 m. This spacing is the shortest distance between each pair of actuators measured along the wall surface of the wind turbine rotor blade 10. The present damage detection system is useful for detecting structural damage in rotor blades with smaller or larger dimensions than those of the present rotor blade. The dimensions of the present rotor blade 10 are indicated by meter scale 19. The length of the illustrated rotor blade 10 is about 29 m. A proximal section of the rotor blade 10 comprises a foot section 11 that is configured for mounting on a pitch-bearing of a wind turbine to fasten the rotor blade 10 to the wind turbine (not shown). The rotor blade comprises an upper elongate shell 18a and a lower elongate shell 18b, as best seen on the cross-sectional perspective view of FIG. 2B), bonded to each other to form a leading edge section 13 and a trailing edge section 12 of the rotor blade 10. The rotor blade 10 may alternatively be manufactured as a single element.

The cross-sectional perspective view of FIG. 2A) is made orthogonally to the longitudinal axis of the rotor blade 10. The rotor blade 10 comprises an inner reinforcement structure comprising first and second rectangular plates 20, 22 mechanically connecting the upper elongate shell 18a to the lower elongate shell lower elongate shell 18b. As illustrated, the first actuator 16 may be fastened to an inner wall surface of the lower elongate shell 18b while it may be fastened to other portions of the inner reinforcement structure in alternative embodiments as described in additional detail below. One of the vibration sensors, i.e. sensor 15c is attached relatively close to the first actuator 16. The vibration sensor 15c is fastened at or proximate to the leading edge section 13 of the rotor blade. The second vibration sensor 15k is fastened to the trailing edge section 12 of the rotor blade. The first sensor position is proximate to the leading edge section of the rotor blade and the second sensor position is proximate to the trailing edge section of the rotor blade 10.

The vibration sensors may be attached to, and distributed along, the outer wall structures of the upper elongate shell 18a and the lower elongate shell 18b. The smallest distance between any pair of vibration sensors may lie between 1 and 4 meters measured along the surface of the wall of the rotor blade, but will depend on various factors such as dimensions and shape of the rotor blade in question. Generally, the number of vibration sensors may be selected as a suitable compromise between system costs and detection accuracy. A larger number of vibration sensors will generally lead to higher system costs, but improved detection/localization properties of the structural damage, i.e. smaller damages can be detected. Fewer vibration sensors will generally lower the system costs at the expense of detection accuracy.

The rotor blade 10 has a structural damage, schematically illustrated by the hatched rectangle 17 (refer to FIG. 1), at the leading edge portion 13 of the rotor blade 10. An important aim of the damage detection system is to detect this type of structural damage under operating conditions of the wind turbine to allow early identification of damage such that suitable repair diagnosis processed can be carried out. Hence, damage detection system is able to prevent dangerous conditions of the rotor blade where certain damaged rotor blade fragment could be thrown away from the wind turbine. Each of the of vibration sensors 15a - 15m may comprise an accelerometer for example a piezoelectric accelerometer such as a type 4507-001 - CCLD accelerometer available from Brüel & Kjær Sound & Vibration Measurement A/S. The actuator 16 may comprise an electromagnetic driven actuator with physical characteristics described in additional detail below.

FIG. 2B) is a simplified schematic cross-sectional view of the rotor blade 10 illustrated on FIG. 1 and FIG. 2A) showing alternative placements of the actuator 16. The actuator 16 may be placed on the first and/or second rectangular plates 20, 22 of the inner reinforcement structure of the rotor blade or placed on the inner wall surface of the upper elongate shell 18a or the lower elongate shell 18b enclosed by the first and second rectangular plates 20, 22. The actuator 16 may be located close to a foot or root portion 20 of the rotor blade preferably in a readily accessible location. This will reduce the risk of lightning strikes and enables installation of the actuator 16 on the rotor blade 10 after the rotor blade has been mounted on the wind turbine, i.e. allowing retrofitting.

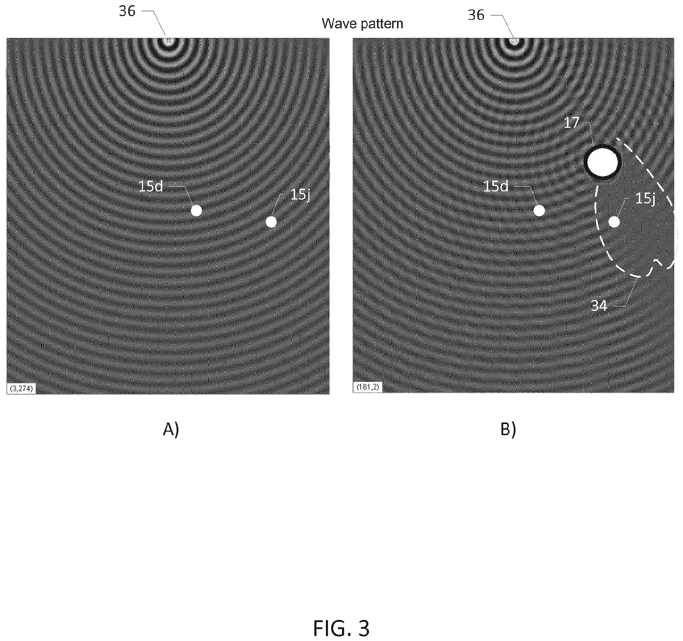

FIG. 3A) is a schematic illustration of mechanical waves, generated by mechanical energy injected into the by an impact of a plunger of the actuator 16, propagating through an undamaged wall portion of the rotor blade 10. FIG. 3B) is a schematic illustration of the corresponding mechanical wave propagation through the rotor blade 10 with the previously discussed structure damage 17 present. As illustrated by FIG. 3A), the mechanical wave propagation from the actuator location 36 to the first and second vibration sensors or accelerometers 15d, 15j is relatively undisturbed in the healthy/undamaged portion of the rotor blade. A reference or baseline phase and/or magnitude difference between first and second vibration signals generated by the first and second accelerometers 15d, 15j is recorded and stored in memory by a detector operatively coupled to the first and second vibration signals. The detector may be placed in the rotor blade, in the wind turbine or in a remote location for example a wind turbine control center. If the detector is remotely located, the rotor blade 10 may comprise a suitable electric interface interconnecting the detector with the vibration sensors 15a-15m and the actuator 16 such that suitable control signals and response signals are conveyed between the rotor blade and the remote detector. The detector may comprise a software programmable processor and associated memory circuitry such as a microprocessor or Digital Signal Processor (DSP) performing the damage detection by a suitable algorithm. The software programmable processor may form part of a portable computer, an embedded computing system or a measurement system such as a properly adapted or programmed version of the PULSE measurement platform which is designed for sound and vibration measurements and signal analysis. The PULSE platform is available from the present applicant/assignee in a plurality of configurations.

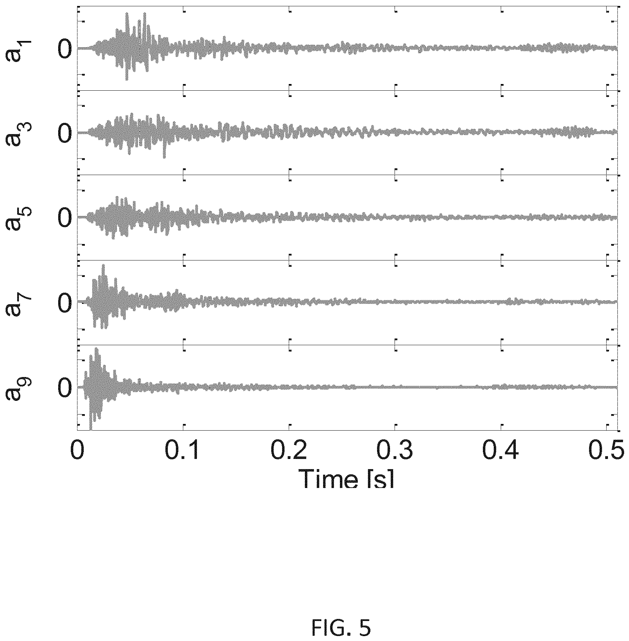

As illustrated by FIG. 3A), the mechanical wave propagation from the actuator impact location 36, where mechanical energy is injected into the wall of rotor blade, to the first and second vibration sensors or accelerometers 15d, 15j is disturbed by a mechanical damage 17 in the damaged portion of the rotor blade 16. The mechanical wave propagation is disturbed inside marked-up area 34 of the rotor blade 16 and this disturbance alters the phase and/or magnitude difference between the first and second vibration signals relative to the difference recorded in the previously discussed reference or base line condition illustrated on FIG. 3A). The detection of the damaged condition or state of the rotor blade 16 is performed by various sophisticated signal feature extraction and analysis algorithms applied to the measured first and second on-line vibration signals during normal operation of the wind turbine. The structural damage is flagged by the damage detector when a statistically significant difference is detected between certain signal features of the on-line measured first and second vibration signals and the corresponding stored baseline signal features (representing the undamaged or reference condition of the rotor blade) is detected as discussed in further detail below with reference to FIGS. 5, 6 and 7.

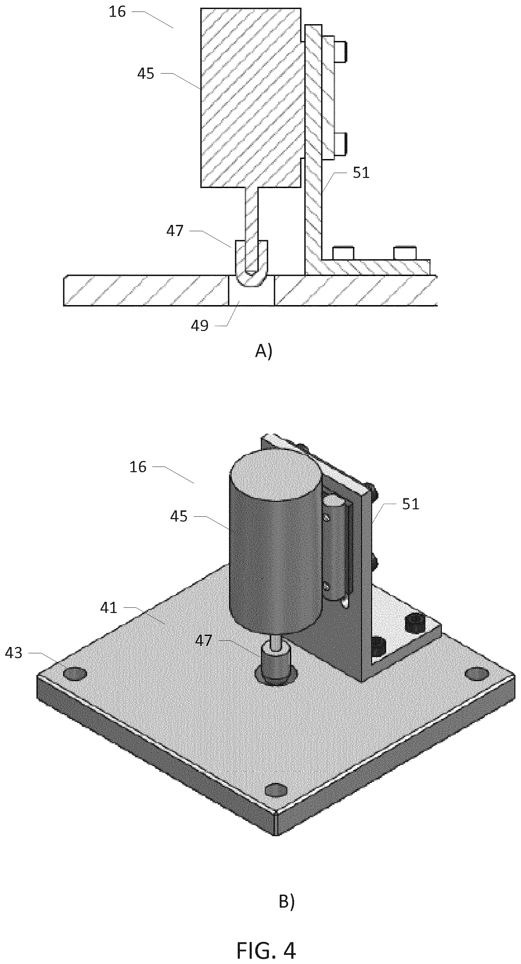

FIG. 4 shows two schematic illustrations of the actuator 16 mounted on the outer wall surface of the rotor blade 10. FIG. 4A) shows a simplified vertical cross-sectional view of the actuator 16 and FIG. 4B) shows a perspective view of the actuator 16. The present actuator 16 is an electrodynamic actuator which is capable of generating high energy/force impacts on the wall of rotor blade to inject large amounts of mechanical energy into the wall. The skilled person will understand that other embodiments of the invention may use other types of suitable actuators. The present electrodynamic actuator 16 comprises an actuator housing 45 surrounding and shielding magnetic and electric components of the actuator. The actuator housing 45 is rigidly attached to an angle piece or plate 51 which is attached to a horizontal rectangular support plate 51 via four screws or bolts. Four through-going attachment holes 43 are placed at respective corners of the horizontal rectangular support plate 51 of the electrodynamic actuator 16. The attachment holes 43 allow the actuator 16 to be rigidly secured to the target wall surface of the wind turbine rotor blade 16 for example by bolts. The horizontal rectangular support plate 51 further comprises a central circular aperture 49 which is shaped and sized to allow passage of a movable plunger 47 of the electrodynamic actuator 16. The weight of the plunger 47 may be larger than 25 grams such as larger than 50 grams, or larger than 100 grams. The relatively large weight of the plunger 47 allows the electrodynamic actuator 16 to inject a high level of mechanical energy into the relevant wall surface 18a, 18b, 20, 22 of the rotor blade 16. This is an important feature to produce mechanical waves of sufficiently large magnitude in the relevant walls sections of the rotor blade 10 to be reliably detected above vibrational noise of the rotor blade. The vibrational noise arises from numerous noise sources such as rotor blade deformation due to the wind and gravity during operation of the wind turbine. These noise sources change in a complex manner with operational conditions of the wind turbine such as pitch angle, azimuth, wind speed and other mechanical noises transmitted from different mechanisms of the wind turbine.

The plunger 47 of the actuator has a peak kinetic energy, at the time of impact on the wall surface, larger than 0.1 J, preferably larger than 0.2 J, even more preferably larger than 0.4 J to produce the desired high energy impacts. The skilled person will appreciate that this range of peak kinetic energy may be achieved by various combinations of speed and mass of the plunger 47 and for different types of actuators. The actuator may be actuated at regular or irregular time intervals during operation of the wind turbine. The time intervals may be larger than 1 second, or larger than 60 seconds such as larger than 10 minutes.

FIG. 5 shows exemplary synchronously recorded time domain vibration signals $a_1$ - $a_9$ generated by a subset of the vibration sensors 15a-15m in response to a single plunger impact of the actuator 16. The time scale of the x-axis runs from 0 to 500 ms where time zero corresponds to the impact instant of the plunger. The different signal propagation delays to the different vibration sensors are caused by the different vibration propagation pathways between the actuator 16 and the vibration sensors are readily apparent. The short duration and high force impact of the plunger of the actuator on the wall surface of the rotor blade means that the impact event approximates a delta-impulse such that the time domain vibration signals $a_1$-$a_9$ can be viewed as respective impulse responses of the rotor blade structure at the sensor positions. Furthermore, the frequency spectrum of the induced mechanical waves in the rotor blade structure or wall is dominated by low frequency spectral components such as components below 3 kHz or below 1 kHz with the previously discussed advantages.

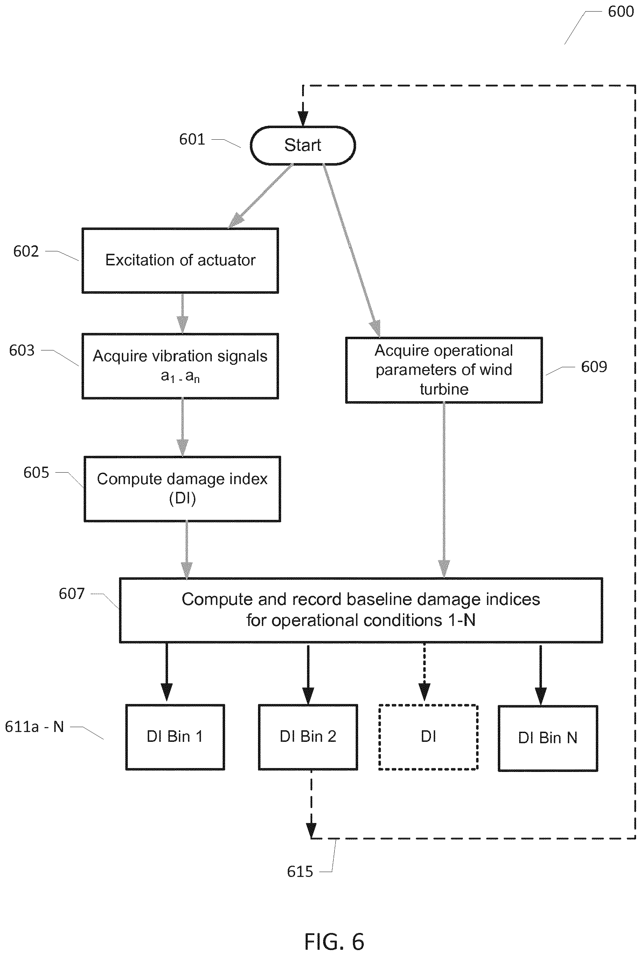

FIG. 6 shows a flow-chart 600 schematically illustrating certain processing steps performed by a preferred embodiment of the present damage detection system in connection with measuring baseline vibration signals during a preferred detector learning phase or stage. The wind turbine is preferably operated normally during the detector learning phase or stage where the rotor blade is in a known undamaged state or condition such that certain derived baseline signal features are representative of the plurality of vibration signals in the undamaged state of the rotor blade.

The detector learning phase starts at step 601 by actuating the previously discussed actuator 16 leading to a single impact of the plunger on the rotor blade wall at the impact location 36. The induced mechanical waves are propagating through the wall of the rotor blade to the plurality of accelerometers 15a - 15k which generate respective vibration signals. A subset of accelerometer vibration signals such as signals from accelerometers 15b, 15c, 15d, 15k and 151 placed relatively close to the actuator 16 are selected and measured in step 603 in connection with the learning phase in the present embodiment. The skilled person will appreciate that fewer accelerometer vibration signals, for example only two vibration signals, or more accelerometer vibration signals may be utilized in alternative embodiments. The measured baseline time domain vibration signals $a_1(t)$-$a_9(t)$ are processed in step 605 and a first so-called baseline damage index (DI) which represents an exemplary baseline signal feature is computed. The first baseline DI is thus representative of phase and/or magnitude differences between the five baseline vibration signals $a_1$-$a_9$. The

damage index may be computed by the previously discussed software programmable microprocessor or Digital Signal Processor (DSP) of the damage detector. The baseline DI may be stored in the detector memory. The baseline DI is preferably based on a co-variance of the five measured baseline vibration signals $a_1$-$a_9$ for example the 2- norm of a co-variance matrix formed by the baseline time domain vibration signals $a_1(t)$-$a_9(t)$, i.e.

$$DI = \|cov(\mathbf{y}(t))\|_2$$

Where y(t) is a signal vector representing $a_1(t)$-$a_9(t)$.

Hence, the baseline DI values are scalars in present embodiment. Simultaneously with the measurement of the baseline vibration signals $a_1(t)$-$a_9(t)$, the damage detector measures and records, in step 609, a predetermined number of operational parameters of the operational wind turbine, for example wind speed, blade pitch etc. such that each of the computed DIs are linked to a particular range or bin of the selected operational parameters of the wind turbine. This is carried out in step 607 where the damage detector initially records the first baseline DI and determines which operational range, or bin of bins 1 to N, the simultaneously measured values of wind speed and blade pitch the first baseline DI fits into. The measured values of wind speed and blade pitch may for example fall within the Bin 1 range and the value of first DI is therefore stored in DI Bin 1 as schematically illustrated by box 611a. Thereafter, one or more DI values are determined in a similar manner during the baseline learning stage by another actuation of the actuator in step 602, acquisition of the (further) baseline vibration signals $a_1(t)$-$a_9(t)$ in step 603, the computation of a further baseline DI in step 605 and measurement and recordation of the respective values of the associated operational parameters of the wind turbine in step 609. The repetition of baseline DI computation a plurality of times is schematically indicated by flow-chart arrow 615. The computed plurality of baseline DIs are stored in the appropriate bins by the damage detector such that each bin at the completion of the detector baseline learning stage comprises a set of DI values that is statistically representative of the particular range of wind turbine operational parameters as defined by the bin in question.

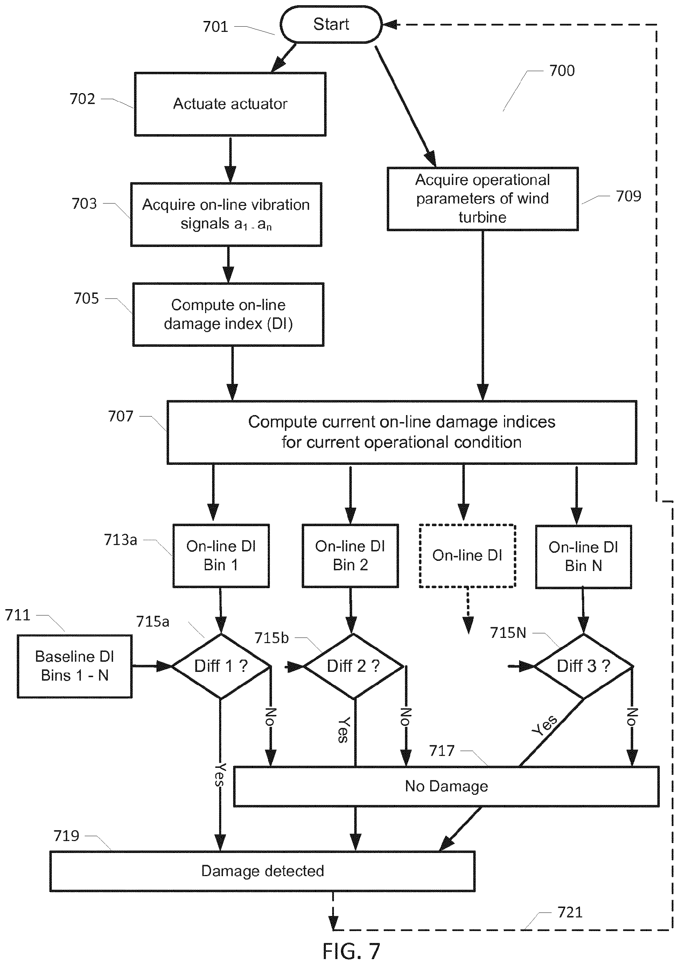

FIG. 7 is a flow-chart 700 of processing steps performed by a preferred embodiment of the present damage detection system in connection with measuring on-line vibration signals and detecting structural damage of the rotor blade during normal wind turbine operation. The detector detection stage or phase starts at step 701 by actuating the previously discussed actuator 16 leading to a single impact of the plunger on the rotor blade wall at the impact location 36. The induced mechanical waves are propagating through the wall of the rotor blade to the plurality of accelerometers 15b, 15c, 15d, 15k and 15l which generate respective on-line time domain vibration signals $a_1(t)$-$a_9(t)$ similar to the above discussed situation during the learning phase of the damage detector. The on-line time domain vibration signals $a_1(t)$-$a_9(t)$ are measured synchronously in step 703, preferably by two or more synchronously operating A/D converters. The skilled person will appreciate that fewer accelerometer vibration signals, for example only two vibration signals, or more accelerometer vibration signals may be utilized during the detection phase in alternative embodiments of the invention as discussed above in connection with the learning phase of the damage detector. The measured on-line time domain vibration signals $a_1(t)$-$a_9(t)$ are processed in step 705 and a first on-line damage index (DI) is computed. The first on-line DI is thus representative of phase and/or magnitude differences between the measured five on-line time domain vibration signals $a_1$-$a_9$. The first on-line damage index DI is computed as discussed above for example by taking the 2 -norm of the co-variance matrix formed by the on-line time domain vibration signals $a_1(t)$-$a_9(t)$ and the computed first on-line DI may be stored in the detector memory.

Simultaneously with the measurement of the on-line vibration signals $a_1(t)$-$a_9(t)$, the damage detector measures and records, in step 709, the previously discussed operational parameters of the wind such that each of the computed on-line DIs is linked to a particular range or bin of the selected operational parameters of the wind turbine. This operation is carried out in step 707 where the damage detector initially records the first on-line DI and determines which operational range, or bin of Bins 1 to N, of the simultaneously measured values of wind speed and blade pitch the first on-line DI fits into. The measured values of wind speed and blade pitch may for example fall within the Bin 1 range and the value of first on-line DI is therefore processed through Bin 1 as schematically illustrated by box 713a. In step 715a, the value of the first on-line DI is compared with the previously determined and stored baseline DI values for the same bin, i.e. Bin 1, as indicated by box 711. The previously determined and stored DI baseline values may be represented by a suitable statistical measure of the baselines DI values such as a distribution curve or function. If the value of the first on-line DI differs from the stored DI baseline values, or the statistical measure derived therefrom, by more than a threshold value, the detection process follows the "yes"-arrow to block 719 where a structural damage of the rotor blade is identified and flagged by the present damage detection system. The skilled person will understand that several instances of deviation between the on-line measured DIs and the stored DI baseline values may be required before the structural damage of the rotor blade is flagged to improve the statistical significance of the damage detection.

A human operator may be notified by the damage detection system of a detected structural damage of the rotor blade in various ways - for example via a visual computer display alert, sound alert or an electronic message alert such as an email or SMS message.

On the other hand, if the value of the first on-line DI complies with the stored DI baseline values, or the statistical measure derived therefrom, the detection process follows the "no"-arrow from the comparison block 715a to the block 717 where the current state or condition of the rotor blade is identified and flagged as undamaged or healthy by the present damage detection system. This determination may of course be logged by the damage detector in a suitable memory area. The damage detector thereafter proceeds to repeat the above-mentioned steps, possibly after a predetermined time interval or pause, as schematically indicated by the flow-chart arrow 721 as long as the wind turbine remains operational to produce electrical power. The skilled person will understand that the frequency at which the above-mentioned processing steps, i.e. the measurement cycle, of the on-line detection phase are repeated may vary. The repetition frequency may be very low for example lower than 1 Hz or lower than 0.1 Hz. The repetition frequency may for example correspond to a time period larger than one minute or even larger than 60 minutes.

The use of a low repetition frequency may allow the plurality of vibration detectors or accelerometers 15b, 15c, 15d, 15k and 151 and the actuator(s) to be powered down in-between measurement cycles to reduce power consumption of the damage detection system. Such as low repetition frequency will also help to increase the life time of the actuator(s), accelerometers and other system components by reducing operational wear.

## Claims

1. A damage detection system for a wind turbine rotor blade (10), comprising:

   a first actuator (16) configured for attachment to a first actuator position of a wall surface (18a, 18b) of the wind turbine rotor blade (10) and for injecting mechanical energy into the wall surface (18a, 18b), said first actuator (16) comprising a plunger (47), said plunger (47) having a peak kinetic energy, at impact on the wall surface (18a, 18b) of the rotor blade (10), larger than 0.1 J, preferably larger than 0.2 J, even more preferably larger than 0.4 J,
   a first vibration sensor (15a-15m), such as an accelerometer, configured for measuring mechanical waves propagating through the wall of the rotor blade (10) at a first sensor position,
   a second vibration sensor (15a-15m), such as an accelerometer, configured for measuring mechanical waves propagating through the wall of the rotor blade (10) at a second sensor position;
   wherein the first and second sensor positions are spaced apart with a predetermined distance along the wall surface (18a, 18b) of the rotor blade (10),

   a damage detector configured for:

   receipt of first and second vibration signals $(a_1-a_9)$ generated by the first and second vibration sensors (15a-15m), respectively, detecting structural damage (17) of the rotor blade (10) based on phase and/or magnitude differences between the first and second vibration signals.

2. A damage detection system according to claim 1, wherein the first actuator (16) comprises an electrodynamic actuator (16) with the plunger (47), said plunger (47) has a weight larger than 25 g, such as larger than 50 g.

3. A damage detection system according to claim 1 or 2, wherein the first actuator (16) is actuated at regular or irregular time intervals where a time interval between a pair successive actuations of the first actuator (16) is longer than 1 s, such as longer than 60 s.

4. A damage detection system according to any of the preceding claims, wherein the damage detector is configured for:

   measuring baseline or reference first and second vibration signals in connection with a detector learning phase where the wind turbine is operated with the rotor blade (10) in an undamaged condition,
   determining, and storing in a detector memory, one or more baseline signal features representative of phase and/or magnitude differences between the first and second baseline vibration signals,
   measuring first and second on-line vibration signals $(a_1-a_9)$ during operation of the wind turbine and determining one or more on-line signal features from the first and second on-line vibration signals $(a_1-a_9)$,
   comparing the one or more baseline signal features with the corresponding one or more on-line signal features during the operation of the wind turbine,
   detecting the structural damage (17) of the rotor blade (10) based on a difference between the one or more baseline signal features and the one or more on-line signal features.

5. A damage detection system according to claim 4, wherein the one or more baseline signal features comprises a covariance feature of the measured first and second baseline vibration signals; and the one or more on-line signal features comprises a covariance feature of the measured first and second on-line vibration signals $(a_1-a_9)$.

**6.** A damage detection system according to any of the preceding claims, comprising at least a second actuator configured for attachment to a second actuator position of a wall surface (18a, 18b) of the rotor blade (10) and injecting mechanical energy into the wall surface.

**7.** A wind turbine rotor blade (10), comprising:

an upper elongate wall (18a), a lower elongate wall (18b), a leading edge section (13) and a trailing edge section (12),
an inner reinforcement structure (20, 22) mechanically connecting the upper elongate wall (18a) and the lower elongate wall (18b),
a foot section (11) for mounting on a pitch-bearing;
a first actuator (16) attached at a first actuator position on a surface of the upper or lower elongate walls (18a, 18b) or on a wall surface of the inner reinforcement structure (20, 22),
said first actuator (16) comprising a plunger (47) configured to inject mechanical energy into the wall surface, said plunger (47) having a peak kinetic energy, at impact on the wall surface (18a, 18b) of the rotor blade (10), larger than 0.1 J, preferably larger than 0.2 J, even more preferably larger than 0.4 J,
a first vibration sensor (15a-15m), such as an accelerometer, attached to the upper or lower elongate walls (18a, 18b) at a first sensor position and configured for measuring mechanical waves propagating through the upper or lower elongate wall (18a, 18b) of the rotor blade (20),
a second vibration sensor (15a-15m), such as an accelerometer, attached to the upper or lower elongate walls (18a, 18b) at a second sensor position and configured for measuring mechanical waves propagating through the upper or lower elongate wall (18a, 18b) of the rotor blade (10); wherein the first and second sensor positions are spaced apart with a predetermined distance on the wall surface of the rotor blade (10),
an electrical interface assembly configured for:

receipt of first and second vibration signals ($a_1$-$a_9$) generated by the first and second vibration sensors (15a-15m), respectively,
supplying an actuator control signal to the first actuator (16).

**8.** A wind turbine rotor blade (10) according to claim 7 wherein the first actuator position is situated on an inner surface of the upper or lower elongate walls (18a, 18b) or situated on a surface of the inner reinforcement structure (20, 22); and wherein the first and second sensor positions are situated on an outer wall surface of the upper and lower elongate walls (18a, 18b).

**9.** A wind turbine rotor blade (10) according to claim 8, wherein the first sensor position is proximate to the leading edge section of the rotor blade and the second sensor position is proximate to the trailing edge section of the rotor blade.

**10.** A wind turbine rotor blade (10) according to any of claims 7-9, wherein the distance between the first actuator and at least one of the first and second vibration sensors lies between 1 m and 50 m, more preferably between 1 m and 6 m.

**11.** A wind turbine rotor blade (10) according to any of claims 7-10, comprising:

one or more additional actuators attached to the surface of the upper or lower elongate walls (18a, 18b) or attached to the surface of the inner reinforcement structure (20, 22) at respective spaced apart actuator positions; and
at least one additional vibration sensor attached to the surface of the upper or lower elongate walls (18a, 18b) at a third sensor position spaced apart from the each of the first and second sensor positions.

**12.** A method of detecting structural damage of a rotor blade (10), comprising steps of:

a) mechanically attaching a first actuator (16) to a first actuator position of a wall surface of the rotor blade (10), said first actuator (16) comprising a plunger (47),
b) attaching a first vibration sensor (15a-15m), such as a first accelerometer, at a first sensor position on the wall surface of the rotor blade,
c) attaching a second vibration sensor (15a-15m), such as a second accelerometer, at a second sensor position on the wall surface of the rotor blade,
d) actuating the first actuator (16) by an actuation signal to inject mechanical energy into the wall surface by said plunger (47) which has a peak kinetic energy, at impact on the wall surface (18a, 18b) of the rotor blade (10), larger than 0.1 J, preferably larger than 0.2 J, even more preferably larger than 0.4 J,
e) measuring a first vibration signal ($a_1$-$a_9$) generated by the first vibration sensor (15a-15m) in response to mechanical waves propagating through the wall of the rotor blade at the first sensor position,
f) measuring a second vibration signal ($a_1$-$a_9$) generated by the second vibration sensor (15a-15m) in response to mechanical waves propagating through the wall of the rotor blade (10) at the second sensor position,
g) detecting structural damage (17) of the rotor blade (10) based on phase and/or magnitude differences between the first and second vibration signals ($a_1$-$a_9$).

13. A method of detecting structural damage according to claim 12, comprising a further step of:
h) synchronously sampling and digitizing the first and second vibration signals ($a_1$-$a_9$).

14. A method of detecting structural damage according to claim 12 or 13, where step g) comprises further steps of:

i) measuring baseline or reference first and second vibration signals in connection with a detector learning phase where the wind turbine is operated with the rotor blade (10) in an undamaged condition,
j) determining and storing one or more baseline signal features representative of phase and/or magnitude differences between the first and second baseline vibration signals,
k) measuring first and second on-line vibration signals ($a_1$-$a_9$) during operation of the wind turbine and determining one or more on-line signal features from the first and second on-line vibration signals ($a_1$-$a_9$),
l) comparing the one or more baseline signal features with the corresponding one or more on-line signal features during the operation of the wind turbine,
m) detecting the structural damage (17) of the rotor blade (10) based on a difference between the one or more baseline signal features and the one or more on-line signal features.

15. A method of detecting structural damage according to claim 14, where the one or more baseline signal features comprises a covariance feature of the measured first and second baseline vibration signals; and
the one or more on-line signal features comprises a covariance feature of the measured first and second on-line vibration signals ($a_1$-$a_9$).

16. A method of detecting structural damage according to any of claims 12-15, wherein the first actuator (16) is actuated at regular or irregular time intervals where a time interval between a pair successive actuations of the first actuator (16) is longer than 1 s, such as longer than 60 s.

17. A method of detecting structural damage according to claim 16, wherein the first actuator (16) is actuated at a predetermined repetition frequency lower than 1 Hz, such as lower than 0.1 Hz, or lower 0.01 Hz.

**Patentansprüche**

1. System zur Erkennung von Schäden für ein Windturbinenrotorblatt (10), umfassend:

ein erstes Stellglied (16), das zur Befestigung an einer ersten Stellgliedposition einer Wandfläche (18a, 18b) des Windturbinenrotorblatts (10) und zum Einspeisen mechanischer Energie in die Wandfläche (18a, 18b) eingerichtet ist, wobei das erste Stellglied (16) einen Kolben (47) umfasst, wobei der Kolben (47) eine kinetische Spitzenenergie beim Aufprall auf der Wandfläche (18a, 18b) des Rotorblatts (10) größer als 0,1 J, bevorzugt größer als 0,2 J, noch bevorzugter größer als 0,4 J aufweist,
einen ersten Vibrationssensor (15a-15m), wie einen Beschleunigungsmesser, der zum Messen mechanischer Wellen, die sich durch die Wand des Rotorblatts (10) ausbreiten, an einer ersten Sensorposition eingerichtet ist,
einen zweiten Vibrationssensor (15a-15m), wie einen Beschleunigungsmesser, der zum Messen mechanischer Wellen, die sich durch die Wand des Rotorblatts (10) ausbreiten, an einer zweiten Sensorposition eingerichtet ist; wobei die erste und zweite Sensorposition mit einem vorbestimmten Abstand entlang der Wandfläche (18a, 18b) des Rotorblatts (10) beabstandet sind,
einen Schadensdetektor, der eingerichtet ist zum:

Empfangen erster und zweiter Vibrationssignale ($a_1$-$a_9$), die durch die ersten bzw.-zweiten Vibrationssensoren (15a-15m) erzeugt werden,
Erkennen struktureller Schäden (17) des Rotorblatts (10) basierend auf Phasen- und/oder Magnitudendifferenzen zwischen dem ersten und zweiten Vibrationssignal.

2. System zur Erkennung von Schäden nach Anspruch 1 , wobei das erste Stellglied (16) ein elektrodynamisches Stellglied (16) mit dem Kolben (47) umfasst, wobei der Kolben (47) ein Gewicht größer als 25 g, wie größer als 50 g aufweist.

3. System zur Erkennung von Schäden nach Anspruch 1 oder 2, wobei das erste Stellglied (16) in regelmäßigen oder unregelmäßigen Zeitintervallen betätigt wird, wo ein Zeitintervall zwischen einem Paar aufeinanderfolgenden Betätigungen des ersten Stellglieds (16) länger als 1 s, wie länger als 60 s. ist.

4. System zur Erkennung von Schäden nach einem der vorstehenden Ansprüche, wobei der Schadensdetektor eingerichtet ist zum:

Messen von ersten und zweiten Grundlinien- oder Referenzvibrationssignalen in Verbindung mit einer Detektorlernphase, wo die Windturbine mit dem Rotorblatt (10) in einem unbeschädigten Zustand betrieben wird,

Bestimmen und Speichern in einem Detektorspeicher eines oder mehrerer Grundliniensignalmerkmale, die für Phasen- und/oder Magnitudendifferenzen zwischen den ersten und zweiten Grundlinienvibrationssignalen repräsentativ sind,

Messen erster und zweiter On-line-Vibrationssignale ($a_1$-$a_9$) während eines Betriebs der Windturbine und Bestimmen eines oder mehrerer On-line-Signalmerkmale aus den ersten und zweiten On-line-Vibrationssignalen ($a_1$-$a_9$),

Vergleichen des einen oder der mehreren Grundliniensignalmerkmale mit dem einen oder den mehreren entsprechenden On-line-Signalmerkmalen während des Betriebs der Windturbine,

Erkennen der strukturellen Schäden (17) des Rotorblatts (10) basierend auf einer Differenz zwischen dem einen oder den mehreren Grundliniensignalmerkmalen und dem einen oder den mehreren On-line-Signalmerkmalen.

5. System zur Erkennung von Schäden nach Anspruch 4, wobei das eine oder die mehreren Grundliniensignalmerkmale ein Covarianzmerkmal der gemessenen ersten und zweiten Grundlinienvibrationssignale umfassen; und
das eine oder die mehreren On-line-Signalmerkmale ein Covarianzmerkmal der gemessenen ersten und zweiten On-line Vibrationssignale ($a_1$-$a_9$) umfassen.

6. System zur Erkennung von Schäden nach einem der vorstehenden Ansprüche, umfassend zumindest ein zweites Stellglied, das zur Befestigung an einer zweiten Stellgliedposition einer Wandfläche (18a, 18b) des Rotorblatts (10) und Einspeisen mechanischer Energie in die Wandfläche eingerichtet ist.

7. Windturbinenrotorblatt (10), umfassend:

eine obere längliche Wand (18a), eine untere längliche Wand (18b), einen Vorderkantenabschnitt (13) und einen Hinterkantenabschnitt (12),
eine innere Verstärkungsstruktur (20, 22), die die obere längliche Wand (18a) und die untere längliche Wand (18b) mechanisch verbindet,
einen Fußabschnitt (11) zum Montieren an einem Nicklager;
ein erstes Stellglied (16), das an einer ersten Stellgliedposition auf einer Fläche der oberen oder unteren länglichen Wand (18a, 18b) oder an einer Wandfläche der inneren Verstärkungsstruktur (20, 22) befestigt ist,
wobei das erste Stellglied (16) einen Kolben (47) umfasst, der eingerichtet ist, mechanische Energie in die Wandfläche einzuspeisen, wobei der Kolben (47) eine kinetische Spitzenenergie beim Aufprall auf der Wandfläche (18a, 18b) des Rotorblatts (10) größer als 0,1 J, bevorzugt größer als 0,2 J, noch bevorzugter größer als 0,4 J aufweist,
einen ersten Vibrationssensor (15a-15m), wie einen Beschleunigungsmesser, der an der oberen oder unteren länglichen Wand (18a, 18b) an einer ersten Sensorposition befestigt ist und zum Messen mechanischer Wellen, die sich durch die obere oder untere längliche Wand (18a, 18b) des Rotorblatts (20) ausbreiten, eingerichtet ist,
einen zweiten Vibrationssensor (15a-15m), wie einen Beschleunigungsmesser, der an der oberen oder unteren länglichen Wand (18a, 18b) an einer zweiten Sensorposition befestigt ist und zum Messen mechanischer Wellen, die sich durch die obere oder untere längliche Wand (18a, 18b) des Rotorblatts (10) ausbreiten, eingerichtet ist; wobei die erste und zweite Sensorposition mit einem vorbestimmten Abstand an der Wandfläche des Rotorblatts (10) beabstandet sind,
eine elektrische Schnittstellenmontage, die eingerichtet ist zum:

Empfangen erster und zweiter Vibrationssignale ($a_1$-$a_9$), die durch die ersten bzw. zweiten Vibrationssensoren (15a-15m) erzeugt werden,
Zuleiten eines Stellgliedsteuersignals zum ersten Stellglied (16).

8. Windturbinenrotorblatt (10) nach Anspruch 7, wobei die erste Stellgliedposition an einer Innenfläche der oberen oder unteren länglichen Wand (18a, 18b) liegt oder an einer Fläche der inneren Verstärkungsstruktur (20, 22) liegt; und
wobei die erste und zweite Sensorposition an einer Außenwandfläche der oberen oder unteren länglichen Wand (18a, 18b) liegen.

9. Windturbinenrotorblatt (10) nach Anspruch 8, wobei die erste Sensorposition nahe dem Vorderkantenabschnitt des Rotorblatts liegt und die zweite Sensorposition nahe dem Hinterkantenabschnitt des Rotorblatts liegt.

10. Windturbinenrotorblatt (10) nach einem der Ansprüche 7-9, wobei der Abstand zwischen dem ersten Stellglied und zumindest einem von dem ersten und zweiten Vibrationssensor zwischen 1 m und 50 m, bevorzugter zwischen 1 m und 6 m. beträgt

11. Windturbinenrotorblatt (10) nach einem der Ansprüche 7-10, umfassend:

ein oder mehrere zusätzliche Stellglieder, die an der Fläche der oberen oder unteren länglichen Wand (18a, 18b) befestigt sind oder an der Fläche der inneren Verstärkungsstruktur (20, 22) an jeweiligen beabstandeten Stellgliedpositionen befestigt sind; und
zumindest einen zusätzlichen Vibrationssensor, der an der Fläche der oberen oder unteren länglichen Wand (18a, 18b) an einer dritten Sensorposition befestigt ist, die von jeder der ersten und zweiten Sensorposition beabstandet ist.

12. Verfahren zur Erkennung von strukturellen Schäden eines Rotorblatts (10), umfassend Schritte zum:

a) mechanischen Befestigen eines ersten Stellglieds (16) an einer ersten Stellgliedposition einer Wandfläche des Rotorblatts (10), wobei das erste Stellglied (16) einen Kolben (47) umfasst,
b) Befestigen eines ersten Vibrationssensors (15a-15m), wie eines ersten Beschleunigungsmessers, an einer ersten Sensorposition an der Wandfläche des Rotorblatts
c) Befestigen eines zweiten Vibrationssensors (15a-15m), wie eines zweiten Beschleunigungsmessers, an einer zweiten Sensorposition an der Wandfläche des Rotorblatts,
d) Betätigen des ersten Stellglieds (16) durch ein Betätigungssignal, um mechanische Energie in die Wandfläche durch den Kolben (47) einzuspeisen, der eine kinetische Spitzenenergie beim Aufprall auf der Wandfläche (18a, 18b) des Rotorblatts (10) größer als 0,1 J, bevorzugt größer als 0,2 J, noch bevorzugter größer als 0,4 J aufweist,
e) Messen eines ersten Vibrationssignals $(a_1-a_9)$, das durch den ersten Vibrationssensor (15a-15m) in Reaktion auf mechanische Wellen erzeugt wird, die sich durch die Wand des Rotorblatts ausbreiten, an der ersten Sensorposition,
f) Messen eines zweiten Vibrationssignals $(a_1-a_9)$, das durch den zweiten Vibrationssensor (15a-15m) in Reaktion auf mechanische Wellen erzeugt wird" die sich durch die Wand des Rotorblatts (10) ausbreiten, an der zweiten Sensorposition,
g) Erkennen struktureller Schäden (17) des Rotorblatts (10) basierend auf Phasen- und/oder Magnitudendifferenzen zwischen dem ersten und zweiten Vibrationssignal $(a_1-a_9)$.

13. Verfahren zur Erkennung von strukturellen Schäden nach Anspruch 12, umfassend einen weiteren Schritt zum:
h) synchronen Abtasten und Digitalisieren der ersten und zweiten Vibrationssignale $(a_1-a_9)$.

14. Verfahren zur Erkennung von strukturellen Schäden nach Anspruch 12 oder 13, wo Schritt g) weitere Schritte umfasst zum:

i) Messen erster und zweiter Grundlinien- oder Referenzvibrationssignale in Verbindung mit einer Detektorlernphase, wo die Windturbine mit dem Rotorblatt (10) in einem unbeschädigten Zustand betrieben wird,
j) Bestimmen und Speichern eines oder mehrerer Grundliniensignalmerkmale, die für Phasen- und/oder Magnitudendifferenzen zwischen den ersten und zweiten Grundlinienvibrationssignalen repräsentativ sind,
k) Messen erster und zweiter On-line-Vibrationssignale $(a_1-a_9)$ während eines Betriebs der Windturbine und Bestimmen eines oder mehrerer On-line-Signalmerkmale aus den ersten und zweiten On-line-Vibrationssignalen $(a_1-a_9)$,
l) Vergleichen des einen oder der mehreren Grundliniensignalmerkmale mit dem einen oder den mehreren entsprechenden On-line-Signalmerkmalen während des Betriebs der Windturbine,
m) Erkennen der strukturellen Schäden (17) des Rotorblatts (10) basierend auf einer Differenz zwischen dem einen oder den mehreren Grundliniensignalmerkmalen und dem einen oder den mehreren On-line-Signalmerkmalen.

15. Verfahren zur Erkennung von strukturellen Schäden nach Anspruch 14, wobei das eine oder die mehreren Grundliniensignalmerkmale ein Covarianzmerkmal der gemessenen ersten und zweiten Grundlinienvibrationssignale umfassen; und
das eine oder die mehreren On-line-Signalmerkmale ein Covarianzmerkmal der gemessenen ersten und zweiten On-line Vibrationssignale $(a_1-a_9)$ umfassen.

16. Verfahren zur Erkennung von strukturellen Schäden nach einem der Ansprüche 12-15, wobei das erste Stellglied (16) in regelmäßigen oder unregelmäßigen Zeitintervallen betätigt wird, wo ein Zeitintervall zwischen einem Paar aufeinanderfolgenden Betätigungen des ersten Stellglieds (16) länger als 1 s, wie länger als 60 s. ist.

17. Verfahren zur Erkennung von strukturellen Schäden nach Anspruch 16, wobei das erste Stellglied (16) bei einer vorbestimmten Wiederholungsfrequenz betätigt wird, die niedriger als 1 Hz, wie niedriger als 0,1 Hz, oder niedriger 0,01 Hz ist.

**Revendications**

1. Système de détection d'endommagement pour une pale de rotor d'éolienne (10), comprenant :

   un premier actionneur (16) configuré pour être fixé à une première position d'actionneur d'une surface de paroi (18a, 18b) de la pale de rotor d'éolienne (10) et pour injecter de l'énergie mécanique dans la surface de paroi (18a, 18b), ledit premier actionneur (16) comprenant un piston plongeur (47), ledit piston plongeur (47) présentant une énergie cinétique de crête, lors d'un impact sur la surface de paroi (18a, 18b) de la pale de rotor (10), supérieure à 0,1 J, préférentiellement à 0,2 J, encore plus préférentiellement supérieure à 0,4 J, un premier capteur de vibrations (15a-15m), tel qu'un accéléromètre, configuré pour mesurer des ondes mécaniques se propageant à travers la paroi de la pale de rotor (10) dans une première position de capteur, un second capteur de vibrations (15a-15m), tel qu'un accéléromètre, configuré pour mesurer des ondes mécaniques se propageant à travers la paroi de la pale de rotor (10) dans une deuxième position de capteur; dans lequel les première et deuxième positions de capteur sont espacées d'une distance prédéterminée le long de la surface de paroi (18a, 18b) de la pale de rotor (10), un détecteur d'endommagement configuré pour :

   réceptionner des premier et second signaux de vibration ($a_1$-$a_9$) générés par les premier et second capteurs de vibrations (15a-15m), respectivement, détecter un endommagement structurel (17) de la pale de rotor (10) sur la base de différences de phase et/ou d'amplitude entre les premier et second signaux de vibration.

2. Système de détection d'endommagement selon la revendication 1, dans lequel le premier actionneur (16) comprend un actionneur électrodynamique (16) avec le piston plongeur (47), ledit piston plongeur (47) présente un poids supérieur à 25 g, tel que supérieur à 50 g.

3. Système de détection d'endommagement selon la revendication 1 ou 2, dans lequel le premier actionneur (16) est actionné à des intervalles de temps réguliers ou irréguliers, un intervalle de temps entre une paire d'actionnements successifs du premier actionneur (16) étant supérieur à 1 s, tel que supérieur à 60 s.

4. Système de détection d'endommagement selon l'une quelconque des revendications précédentes, dans lequel le détecteur d'endommagement est configuré pour :

   mesurer des premier et second signaux de vibration de base ou de référence en relation avec une phase d'apprentissage de détecteur dans laquelle l'éolienne est actionnée avec la pale de rotor (10) dans un état non endommagé, déterminer et stocker dans une mémoire de détecteur une ou plusieurs caractéristiques de signal de base représentatives de différences de phase et/ou d'amplitude entre les premier et second signaux de vibration de base, mesurer des premier et second signaux de vibration en ligne ($a_1$-$a_9$) pendant un fonctionnement de l'éolienne et déterminer une ou plusieurs caractéristiques de signal en ligne à partir des premier et second signaux de vibration en ligne ($a_1$-$a_9$), comparer les une ou plusieurs caractéristiques de signal de base avec les une ou plusieurs caractéristiques de signal en ligne correspondantes pendant le fonctionnement de l'éolienne, détecter l'endommagement structurel (17) de la pale de rotor (10) sur la base d'une différence entre les une ou plusieurs caractéristiques de signal de base et les une ou plusieurs caractéristiques de signal en ligne.

5. Système de détection d'endommagement selon la revendication 4, dans lequel les une ou plusieurs caractéristiques de signal de base comprennent une caractéristique de covariance des premier et second signaux de vibration de base mesurés ; et les une ou plusieurs caractéristiques de signal en ligne comprennent une caractéristique de covariance des premier et second signaux de vibration en ligne mesurés ($a_1$-$a_9$).

6. Système de détection d'endommagement selon l'une quelconque des revendications précédentes, comprenant au moins un second actionneur configuré pour être fixé dans une deuxième position d'actionneur d'une surface de paroi (18a, 18b) de la pale de rotor (10) et pour injecter de l'énergie mécanique dans la surface de la paroi.

7. Pale de rotor d'éolienne (10), comprenant :

   une paroi allongée supérieure (18a), une paroi allongée inférieure (18b), une section de bord d'attaque (13) et une section de bord de fuite (12), une structure de renforcement interne (20, 22) reliant mécaniquement la paroi allongée supérieure (18a) et la paroi allongée inférieure (18b),

une section de pied (11) pour montage sur un palier de pas ;

un premier actionneur (16) fixé au niveau d'une première position d'actionneur sur une surface des parois allongées supérieure ou inférieure (18a, 18b) ou sur une surface de paroi de la structure de renforcement interne (20, 22),

ledit premier actionneur (16) comprenant un piston plongeur (47) configuré pour injecter de l'énergie mécanique dans la surface de paroi, ledit piston plongeur (47) ayant une énergie cinétique de crête, lors d'un impact sur la surface de paroi (18a, 18b) de la pale de rotor (10), supérieure à 0,1 J, préférentiellement à 0,2 J, encore plus préférentiellement supérieure à 0,4 J,

un premier capteur de vibrations (15a-15m), tel qu'un accéléromètre, fixé aux parois allongées supérieure ou inférieure (18a, 18b) dans une première position de capteur et configurée pour mesurer des ondes mécaniques se propageant à travers la paroi allongée supérieure ou inférieure (18a, 18b) de la pale de rotor (20),

un second capteur de vibrations (15a-15m), tel qu'un accéléromètre, fixé aux parois allongées supérieure ou inférieure (18a, 18b) dans une deuxième position de capteur et configuré pour mesurer des ondes mécaniques se propageant à travers la paroi allongée supérieure ou inférieure (18a, 18b) de la pale de rotor (10) ; dans laquelle les première et deuxième positions de capteur sont espacées d'une distance prédéterminée sur la surface de paroi de la pale de rotor (10),

un ensemble d'interface électrique configuré pour :

réceptionner des premier et second signaux de vibration ($a_1$-$a_9$) générés par les premier et second capteurs de vibrations (15a-15m), respectivement,

fournir un signal de commande d'actionneur au premier actionneur (16).

8. Pale de rotor d'éolienne (10) selon la revendication 7, dans laquelle la première position d'actionneur est située sur une surface interne des parois allongées supérieure ou inférieure (18a, 18b) ou située sur une surface de la structure de renforcement interne (20, 22) ; et

dans lequel les première et deuxième positions de capteur sont situées sur une surface de paroi extérieure des parois allongées supérieure et inférieure (18a, 18b).

9. Pale de rotor d'éolienne (10) selon la revendication 8, dans laquelle la première position de capteur est proche de la section de bord d'attaque de la pale de rotor et la deuxième position de capteur est proche de la section de bord de fuite de la pale de rotor.

10. Pale de rotor d'éolienne (10) selon l'une quelconque des revendications 7 à 9, dans laquelle la distance entre le premier actionneur et au moins l'un des premier et second capteurs de vibrations est comprise entre 1 m et 50 m, plus préférentiellement entre 1 m et 6 m.

11. Pale de rotor d'éolienne (10) selon l'une quelconque des revendications 7 à 10, comprenant :

un ou plusieurs actionneurs additionnel fixés à la surface des parois allongées supérieure ou inférieure (18a, 18b) ou à la surface de la structure de renforcement interne (20, 22) au niveau de positions d'actionneur espacées respectives ; et

au moins un capteur de vibrations additionnel fixé à la surface des parois allongées supérieure ou inférieure (18a, 18b) dans une troisième position de capteur espacée de chacune des première et deuxième positions de capteur.

12. Procédé de détection d'endommagement structurel d'une pale de rotor (10), comprenant les étapes consistant à :

a) fixer mécaniquement un premier actionneur (16) dans une première position d'actionneur d'une surface de paroi de la pale de rotor (10), ledit premier actionneur (16) comprenant un piston plongeur (47),

b) fixer un premier capteur de vibrations (15a-15m), tel qu'un premier accéléromètre, au niveau d'une première position de capteur sur la surface de paroi de la pale de rotor,

c) fixer un second capteur de vibrations (15a-15m), tel qu'un second accéléromètre, au niveau d'une deuxième position de capteur sur la surface de paroi de la pale de rotor,

d) actionner le premier actionneur (16) par l'intermédiaire d'un signal d'actionnement pour injecter de l'énergie mécanique dans la surface de paroi par l'intermédiaire dudit piston plongeur (47) qui présente une énergie cinétique de crête, lors d'un impact sur la surface de paroi (18a, 18b) de la pale de rotor (10), supérieure à 0,1 J, préférentiellement à 0,2 J, encore plus préférentiellement supérieure à 0,4 J,

e) mesurer un premier signal de vibration ($a_1$-$a_9$) généré par le premier capteur de vibrations (15a-15m) en réponse à des ondes mécaniques se propageant à travers la paroi de la pale de rotor dans la première position de capteur,

f) mesurer un second signal de vibration ($a_1$-$a_9$) généré par le second capteur de vibrations (15a-15m) en réponse à des ondes mécaniques se propageant à travers la paroi de la pale de rotor (10) au niveau de la deuxième position de capteur,

g) détecter un endommagement structurel (17) de la pale de rotor (10) sur la base de différences de phase et/ou d'amplitude entre les premier et second signaux de vibration ($a_1$-$a_9$).

13. Procédé de détection d'un endommagement structurel selon la revendication 12, comprenant une étape supplémentaire consistant à :

h) échantillonner et numériser de manière synchrone des premier et second signaux de vibration ($a_1$-$a_9$).

14. Procédé de détection d'endommagement structurel selon la revendication 12 ou 13, dans lequel l'étape g) comprend des étapes supplémentaires consistant à :

i) mesurer des premier et second signaux de vibration de base ou de référence en relation avec une phase d'apprentissage de détecteur dans laquelle l'éolienne est actionnée avec la pale de rotor (10) dans un état non endommagé,
j) déterminer et stocker une ou plusieurs caractéristiques de signal de base représentatives de différences de phase et/ou d'amplitude entre les premier et second signaux de vibration de base,
k) mesurer des premier et second signaux de vibration en ligne ($a_1$-$a_9$) pendant un fonctionnement de l'éolienne et déterminer une ou plusieurs caractéristiques de signal en ligne à partir des premier et second signaux de vibration en ligne ($a_1$-$a_9$),
l) comparer les une ou plusieurs caractéristiques de signal de base avec les une ou plusieurs caractéristiques de signal en ligne correspondantes pendant le fonctionnement de l'éolienne,
m) détecter l'endommagement structurel (17) de la pale de rotor (10) sur la base d'une différence entre les une ou plusieurs caractéristiques de signal de base et les une ou plusieurs caractéristiques de signal en ligne.

15. Procédé de détection d'endommagement structurel selon la revendication 14, dans lequel les une ou plusieurs caractéristiques de signal de base comprennent une caractéristique de covariance des premier et second signaux de vibration de base mesurés ; et
les une ou plusieurs caractéristiques de signal en ligne comprennent une caractéristique de covariance des premier et second signaux de vibration en ligne mesurés ($a_1$-$a_9$).

16. Procédé de détection d'endommagement structurel selon l'une quelconque des revendications 12 à 15, dans lequel le premier actionneur (16) est actionné à des intervalles de temps réguliers ou irréguliers, un intervalle de temps entre une paire d'actionnements successifs du premier actionneur (16) étant supérieur à 1 s, tel que supérieur à 60 s.

17. Procédé de détection d'endommagement structurel selon la revendication 16, dans lequel le premier actionneur (16) est actionné à une fréquence de répétition prédéterminée inférieure à 1 Hz, telle qu'inférieure à 0,1 Hz ou inférieure à 0,01 Hz.

FIG. 1

A)

B)

FIG. 2

A)

B)

FIG. 3

A)

B)

FIG. 4

FIG. 5

FIG. 6

701 — Start

700

702 — Actuate actuator

703 — Acquire on-line vibration signals $a_1 . a_n$

705 — Compute on-line damage index (DI)

709 — Acquire operational parameters of wind turbine

707 — Compute current on-line damage indices for current operational condition

713a — On-line DI Bin 1

On-line DI Bin 2

On-line DI

On-line DI Bin N

711 — Baseline DI Bins 1 - N

715a — Diff 1 ?

715b — Diff 2 ?

715N — Diff 3 ?

Yes    No    Yes    No    Yes    No

717 — No Damage

719 — Damage detected

721

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10065314 A1
- US 20120253697 A1
- EP 2569644 B1